# EUROPÄISCHE PATENTSCHRIFT

(11) **EP 2 072 131 B1**
(45) Veröffentlichungstag und Bekanntmachung des Hinweises auf die Patenterteilung: **22.04.2015**
(21) Anmeldenummer: 07024210.2
(22) Anmeldetag: 13.12.2007
(51) Int. Cl.: B01F 1/00, B01F 13/00, B01F 15/02, B01F 15/04, G01N 1/38, B01L 3/00, G01N 21/07

(54) **Mikrofluidisches Element zur Durchmischung einer Flüssigkeit in einer Reagenz**
Microfluid element for mixing a fluid into a reagent
Elément microfluide destiné au mélange d'un liquide dans un réactif

(43) Veröffentlichungstag der Anmeldung: 24.06.2009
(73) Patentinhaber: Roche Diagnostics GmbH, 68305 Mannheim (DE); F.Hoffmann-La Roche AG, 4070 Basel (CH)
(72) Erfinder: Boehm, Christoph, 68519 Viernheim (DE)
(74) Vertreter: Petirsch, Markus

(56) Entgegenhaltungen:
- EP-A- 0 352 690
- WO-A-95/33986
- US-A- 5 693 233
- US-A1- 2002 027 133

## Beschreibung

Die Erfindung betrifft ein mikrofluidisches Element zur Durchmischung einer Flüssigkeit mit einem Reagenz und ein Verfahren zur Durchmischung mittels eines mikrofluidischen Elements.

Mikrofluidische Elemente zum Durchmischen einer Flüssigkeit mit einem Reagenz werden beispielsweise in diagnostischen Tests (in-vitro-Diagnostik) eingesetzt, mit denen Körperflüssigkeitsproben auf einen darin enthaltenen Analyten für medizinische Zwecke analysiert werden. Der Begriff Durchmischen umfasst dabei sowohl die Möglichkeit, dass das Reagenz in flüssiger Form vorliegt, dass also zwei Flüssigkeiten miteinander gemischt werden, als auch dass das Reagenz als Feststoff vorliegt und in einer Flüssigkeit aufgelöst und homogenisiert wird. Ein wichtiger Bestandteil der Analyse ist ein sogenannter Testträger, auf dem beispielsweise mikrofluidische Elemente mit Kanalstrukturen zur Aufnahme einer flüssigen Probe (insbesondere einer Körperflüssigkeit) vorhanden sind, um die Durchführung aufwendiger mehrstufiger Testführungen ("Testprotokolle") zu ermöglichen. Ein Testträger kann dabei einen oder mehrere mikrofluidische Elemente umfassen.

Beispielsweise werden bei immunchemischen Analysen mit einem mehrstufigen Testablauf, bei dem eine Trennung von gebundenen und freien Reaktionsbestandteilen ("bound/free-Trennung") stattfindet, fluidische Testträger verwendet, mit denen ein gesteuerter Flüssigkeitstransport möglich ist. Die Steuerung des fluiduschen Prozessablaufes kann mit internen (innerhalb des fluidischen Elements) oder mit externen (z.B. im Gerät vorhandenen) Maßnahmen erfolgen. Die (externe) Steuerung kann auf der Anwendung von Druckunterschieden oder auf der Änderung von Kräften basieren, wobei letztere beispielsweise aus der Änderung der Wirkrichtung der Schwerkraft resultieren kann, aber auch aus Zentrifugalkräften, die auf ein rotierendes mikrofluidisches Element oder einen rotierenden Testträger einwirken und z.B. abhängig von der Rotationsgeschwindigkeit und dem Abstand von der Drehachse sind.

Derartige mikrofluidische Elemente und auch Testträger bestehen aus einem Trägermaterial, üblicherweise aus einem Substrat aus Kunststoffmaterial. Die Elemente und Testträger weisen einen von dem Substrat und einem Deckel bzw einer Deckschicht umschlossenen Probenanalysekanal auf, der vielfach aus einer Aufeinanderfolge mehrerer Kanalabschnitte und dazwischen liegenden im Vergleich zu den Kanalabschnitten erweiterten Kammern besteht. Die Strukturen und Dimensionen des Probenanalysekanals mit seinen Kanalabschnitten und Kammern werden durch eine Strukturierung von Kunststoffteilen des Substrates definiert, die z.B. durch Spritzgießtechniken oder andere Verfahren zur Herstellung von geeigneten Strukturen erzeugt werden. Die Herstellung derartiger Testträger und mikrofluidischer Elemente ist beispielsweise beschrieben bei M. Madou, "Fundamentals of Microfabrication", CRC Press, Boca Raton, FL, USA, 2002.

Analysesysteme, die die beschriebenen Testträger umfassen, sind beispielsweise aus folgenden Publikationen bekannt:
US-Patent 4,456,581
US-Patent 4,580,896
US-Patent 4,814,144
US-A 2004/0265171
EP 1 077 771 B1

Zur Durchführung der Analysen enthält der Probenanalysekanal ein Reagenz, das mit einer in den Probenanalysekanal eingebrachten Flüssigkeit reagiert. Die flüssige Probe und das Reagenz werden in dem Testträger miteinander so vermischt, dass eine Reaktion der Probenflüssigkeit mit dem Reagenz zu einer Änderung einer Messgröße führt, die für den in der Probenflüssigkeit enthaltenen Analyten charakteristisch ist. Die Messgröße wird an dem Testträger selbst gemessen. Gebräuchlich sind dabei vor allem optisch auswertbare Messverfahren, bei denen eine Farbänderung oder eine sonstige optisch messbare Größe detektiert werden.

In dem Probenanalysekanal mit seinen kapillaren Kanalstrukturen und kleinen Dimensionen herrschen überwiegend laminare Strömungsverhältnisse. In solchen Kapillarkanälen durchmischen Flüssigkeiten bzw. Flüssigkeiten und Feststoffe nur schlecht. Um die Durchmischung von Reagenz und Probenflüssigkeit zu verbessern sind im Stand der Technik mehrere Vorgehensweisen bekannt.

Beispielsweise wird bei rotierenden Testträgern, die in einem Analysesystem um eine Rotationsachse gedreht werden, das Durchmischen durch schnelle Änderungen der Drehrichtung oder durch Änderung der Drehgeschwindigkeit gefördert. Dieser "Schüttel-Modus" (shake-mode) stellt jedoch hohe Anforderungen an die Antriebseinheit des Analysesystems. Der Verschleiss und die Gefahr von auftretenden Störungen und Ausfällen sind vergleichsweise größer.

Eine weitere im Stand der Technik bekannte Methode, um das Durchmischen von Probenflüssigkeit und Reagenz zu verbessern, ist das Einbringen von Magnetpartikeln, die durch Einwirken eines Elektro- oder Permanent-Magneten in Bewegung versetzt werden. Durch die Integration der Partikel steigt der Aufwand bei der Herstellung der Testträger.

Zusätzlich müssen die Analysesysteme über eine weitere Komponente, nämlich den Magneten, verfügen.

Weiterhin sind Elemente bekannt, deren Kapillarkanäle spezielle Strömungshindernisse, wie beispielsweise Rippen, enthalten. Die Herstellung derartiger, vielfach als Mikrostruktur ausgebildeter Hindernisse verteuert und erschwert den Herstellungsprozess des Testträgers. Außerdem sind derartige Strukturen nicht für alle Mischprozesse bzw. nicht für alle Reagenzien und Probenflüssigkeiten geeignet.

Trotz der vielfachen Bestrebungen, Mischvorgänge in mikrofluidischen Elementen, wie z.B. Testträger, insbesondere das Durchmischen von Reagenz und Probenflüssigkeit, zu verbessern, besteht weiterer Bedarf an einem diesbezüglich verbesserten mikrofluidischen Element.

Der Erfindung liegt folglich die Aufgabe zugrunde, ein mikrofluidisches Element, insbesondere einen Testträger zur Verfügung zu stellen, mittels dem Mischvorgänge, vor allem die Durchmischung von Reagenz und Probenflüssigkeit, verbessert werden.

Gelöst wird die Aufgabe durch ein mikrofluidisches Element mit den Merkmalen des Anspruchs 1 und ein Verfahren mit den Merkmalen des Anspruchs 13.

Im folgenden wird die Erfindung und deren Vorteile unter Bezugnahme auf einen Testträger zur Analyse einer Körperflüssigkeitsprobe auf einen darin enthaltenen Analyten ohne Einschränkung der Allgemeinheit des mikrofluidisches Elements beschrieben und erläutert.

Das erfindungsgemäße mikrofluidische Element wird durch entsprechende Strukturierung eines Substrats hergestellt, wie beispielsweise in "M. Madou, Fundamentals of Microfabrication", CRC Press, Boca Raton, FL, USA, 2002" beschrieben ist. Die als Kanal ausgebildete Kanalstruktur schließt einen langgestreckten Mischkanal ein, der erfindungsgemäß eine Einlassöffnung und eine Auslassöffnung aufweist und zur Mischung eines darin enthaltenen Reagenz mit einer durch die Einlassöffnung in den Mischkanal strömenden Flüssigkeit ausgebildet ist. Erfindungsgemäß steht der Mischkanal über die Auslassöffnung in Fluidverbindung mit einem Ableitkanal.

Im Sinne der Erfindung wird unter einem mikrofluidischen Element ein Element mit einer Kanalstruktur verstanden, dessen kleinste Dimension größer oder gleich 5 µm ist und dessen größte Dimension (beispielsweise Länge eines Kanals) kleiner oder gleich 10 cm ist.

Unter einem "langgestreckten" Kanal wird im Sinne der Anmeldung ein Kanal verstanden, dessen Länge deutlich größer ist als jede Querschnittsdimension seiner Querschnittsfläche. Dabei wird unterstellt, dass die Länge mindestens zehnmal so groß ist wie die größere Querschnittsdimension. Bevorzugt ist die Länge des Kanals wenigstens zwanzigmal so groß wie die Quadratwurzel aus der mittleren Querschnittsfläche des Kanals. Weiter bevorzugt ist die Länge mindestens fünfzigmal, besonders bevorzugt hundertmal so groß wie die Quadratwurzel der mittleren Querschnittsfläche. Bei einem Kanal mit einer kreisförmigen Querschnittsfläche ist somit die Länge bevorzugt zwanzig- bis dreißigmal so groß wie der Radius.

Somit ergeben sich für die Dimensionen, dass die größte Querschnittsdimension einer Kanalstruktur eines mikrofluidischen Elements höchstens 10 mm ist, bevorzugt höchstens 5 mm. Weiter bevorzugt ist die größte Querschnittsdimension höchstens 2 und besonders bevorzugt höchstens 1 mm.

Im Rahmen der Erfindung wird die Tatsache berücksichtigt, dass innerhalb des Mischkanals in Strömungsrichtung ein Konzentrationsgradient des Reagenz entsteht. Unter den in mikrofluidischen Elementen bzw. Testträgern herrschenden Bedingungen ist normalerweise die Konzentration im Bereich der Einlassöffnung des Reagenz am kleinsten und steigt in Strömungsrichtung an.

Die Auslassöffnung ist erfindungsgemäß näher bei der Mitte der Länge des Mischkanals angeordnet als die Einlassöffnung. Der Mischkanal weist einen Zuführabschnitt zwischen der Einlassöffnung und der Auslassöffnung und einen sich an die Auslassöffnung (in Strömungsrichtung) anschließenden, der Einlassöffnung gegenüberliegenden Komplementärabschnitt auf, wobei nach dem Einströmen der Flüssigkeit in den Mischkanal die Konzentration des Reagenz in dem Komplementärabschnitt anders, in der Regel höher, als die Konzentration in dem Zuführabschnitt ist. Die Auslassöffnung ist so auf der Länge des Mischkanals positioniert, dass die in den Ableitkanal durch die Auslassöffnung strömende Flüssigkeit Teilvolumen aus dem Zuführabschnitt und dem Komplementärabschnitt des Mischkanals derart enthält, dass die beiden Flüssigkeitsteilvolumen beschleunigt vermischt werden. Die (jeweils zeitgleich durch die Auslassöffnung strömenden) Teilvolumen aus dem Zuführabschnitt und aus dem Komplementärabschnitt weisen dabei unterschiedliche Konzentrationen des Reagenz auf und werden beim Einströmen in den Ableitkanal durchmischt.

Mit anderen Worten ist das mikrofluidische Element derart ausgebildet, dass die Einlassöffnung des Mischkanals im Vergleich zu der Auslassöffnung näher an einem Ende des Mischkanals angeordnet ist. Eine durch die Einlassöffnung in den Mischkanal des Kanals einströmende Flüssigkeit (beispielsweise eine Körperflüssigkeitsprobe) strömt folglich von einer Position mehr in der Nähe des Endes des Mischkanals zu der Auslassöffnung und somit zu einer Position mehr in der Nähe der Mitte der Länge des Mischkanals.

Der Zuführabschnitt des Mischkanals erstreckt sich somit von einer Position mehr in der Nähe des Endes des Mischkanals zu der mehr in der Nähe der Mitte der Länge des Mischkanals angeordneten Auslassöffnung. Der Komplementärabschnitt ist der Teil des Mischkanals zwischen der Auslassöffnung (mehr in der Mitte der Länge) und dem der Einlassöffnung gegenüberliegenden Ende des Mischkanals. Beim Zufluss in den Ableitkanal des Probenanalysekanals strömen gleichzeitig Teilvolumen aus beiden Abschnitten des Mischkanals durch die Auslassöffnung, wobei die Teilvolumen des jeweiligen Abschnittes unterschiedliche Konzentrationen aufweisen. Hierdurch wird ein Vermischen der Flüssigkeit gefördert, so dass schnell eine Flüssigkeit mit einer homogenen Zusammensetzung resultiert. Die gemischte Flüssigkeit gelangt dann durch den Ableitkanal (gegebenenfalls durch weitere Kanalabschnitte und/oder Kanalkammern) zu einer Zone, in der die gemischte Flüssigkeit weiterverarbeitet wird.

Insbesondere kann das erfindungsgemäße mikrofluidische Element Teil eines Testträgers zur Analyse einer Körperflüssigkeitsprobe auf einen darin enthaltenen Analyten sein. Der Testträger hat einen von dem Substrat und einer Deckschicht umschlossenen Probenanalysekanal, der die als Kanal ausgebildete Kanalstruktur des mikrofluidischen Elements ist. Der Begriff "Substrat" ist derart zu verstehen, dass es sich um ein Trägermaterial handelt, in dem die Kanalstruktur durch Strukturierung eingebracht ist. Hierbei werden die dem Fachmann üblichen Verfahren zur Herstellung wie auch Materialien unterstellt, wie sie beispielsweise in der vorgenannten Referenz M. Madou, Fundamentals of Microfabrication erläutert sind.

Der Probenanalysekanal weist an seinem Anfang eine Probenaufgabeöffnung (Aufgabeöffnung) auf. An seinem Ende schließt der Probenanalysekanal eine Messzone ein, die der Zone zur Weiterverarbeitung der Flüssigkeit in dem mikrofluidischen Element entspricht. Die beim Einströmen in den Ableitkanal durchmischte Flüssigkeit gelangt durch den Ableitkanal zu der Messzone des Probenanalysekanals, in der eine für den Analyten charakteristische Messgröße bestimmt wird.

Im Rahmen der Erfindung wird berücksichtigt, dass ein hoher Konzentrationsgradient innerhalb des Kanals (Probenanalysekanal) dann auftritt, wenn ein oder mehrere getrocknete, beispielsweise lyophilisierte Reagenzien in dem Kanal enthalten sind und gelöst werden. Bei dem Resuspendieren der eingetrockneten Reagenzien entstehen besonders hohe Konzentrationsgradienten, da eine in den Mischkanal einströmende Flüssigkeit die eingetrockneten Reagenzien löst und diese in Strömungsrichtung weiter schwemmt. Schon beim Eintritt einer Flüssigkeit durch die Einlassöffnung werden die Reagenzien im Bereich der Einlassöffnung des Mischkanals gelöst und weiter transportiert, so dass die Konzentration der Reagenzien bzw. des Reagenz in Strömungsrichtung zunimmt.

Das erfindungsgemäße Element mit seinem Mischkanal mit der bevorzugt an einem Ende des Kanals angeordneten Einlassöffnung und der bevorzugt in der Mitte angeordneten Auslassöffnung, die in den Mischkanal mit dem Ableitkanal verbindet, ist auch geeignet, um bei sonstigen Homogenisierungen Anwendung zu finden. Beispielsweise wird hiermit auch das Mischen zweier verschiedener Lösungen, wie es zum Beispiel beim Verdünnen erforderlich ist, verbessert. Somit ist das Element bzw. der Testträger nicht nur auf trockene Reagenzien beschränkt sondern kann ebenfalls zur Mischung zweier Flüssigkeiten, insbesondere bei in flüssiger Form vorliegenden Reagenzien, Verwendung finden.

Das erfindungsgemäße Element, insbesondere der Testträger hat insbesondere folgende Vorteile:
Die Herstellungskosten des Elementes bzw. Testträgers sind durch die Mischeinrichtung praktisch nicht erhöht, da auf Mikrostrukturen, wie Rippen oder zusätzliche Verengungen verzichtet wird.
Das Analysegerät, mit der der Testträger ein Analysesystem bildet, benötigt keine besondere Ausgestaltung. Insbesondere ist bei rotierenden Analysesystemen kein zusätzlicher Aufwand für den Antrieb (wie beispielsweise bei Systemen mit der Schüttelmethode) notwendig. Somit sind auch die Herstellungskosten des Gerätes gering.
Zusätzliche Substanzen, wie Magnetpartikel (magnet beads), die in den Testträger eingebracht werden müssen, sind nicht notwendig. Somit sind die Analysen kostengünstig und der (zum Teil manuelle) Aufwand ist gering.
Das Element ist auch zum Durchmischen von Lösungen mit einem großen Konzentrationsgradienten geeignet.

In einer bevorzugten Ausführungsform ist das mikrofluidische Element um eine Rotationsachse rotierbar. Die Rotationsachse erstreckt sich vorzugsweise durch das Element. Besonders geeignet sind Testträger oder mikrofluidische Elemente, die um ihr Zentrum rotieren.

In einer bevorzugten Ausführungsform des mikrofluidischen Elements ist ein Kapillarstop in dem Element angeordnet, der einen Strömungswiderstand für von dem Mischkanal in den Ableitkanal strömende Flüssigkeit derart bildet, das ein spontanes Entleeren des Mischkanals in den Ableitkanal verhindert wird, bis der Strömungswiderstand durch eine externe Kraft überwunden wird. Dadurch wird verhindert, dass Flüssigkeit allein aufgrund der Kapillarwirkung aus dem Mischkanal durch die Auslassöffnung in den Ableitkanal eintritt. Bevorzugt ist der Kapillarstop direkt hinter der Auslassöffnung des Mischkanals angeordnet.

Die externe Kraft, die zum Überwinden des Strömungswiderstands notwendig ist, ist bevorzugt eine Zentrifugalkraft, die durch Rotation des mikrofluidischen Elements erzeugt wird. Durch eine geeignete Wahl der Rotationsgeschwindigkeit oder durch Änderung der Rotationsgeschwindigkeit kann die Zentrifugalkraft und somit der Reaktionsprozess bzw. der Durchmischungsprozess gesteuert werden, beispielsweise die Verweilzeit einer Flüssigkeit in dem Mischkanal bestimmt werden.

Ebenfalls bevorzugt ist die externe Kraft eine Druckkraft, die auf die Flüssigkeit in dem Mischkanal wirkt. Die Druckkraft kann beispielsweise durch die Erzeugung eines Überdrucks oder eines Unterdrucks innerhalb des Testträgers realisiert sein.

Der Kapillarstop kann bevorzugt einen Kanalabschnitt aufweisen, der mindestens eine hydrophobe Kanalwand einschließt. Die Kanalwand kann bevorzugt mittels einer hydrophobisierenden Substanz hydrophob gemacht werden. Eine derart hydrophobe Kanalkapillarsperre verhindert ebenfalls das selbsttätige Durchströmen dieses Kanals Kanalabschnitts.

Ein bevorzugtes Ausführungsbeispiel eines mikrofluidischen Elements wird nachfolgend anhand eines Testträgers (ohne Beschreibung der Allgemeinheit) und anhand der Zeichnungen beschrieben. Die darin dargestellten technischen Merkmale können einzeln oder in Kombination verwendet werden, um bevorzugte Ausgestaltungen der Erfindung zu schaffen. Sie stellen keine Beschränkung der Allgemeinheit dar. Es zeigen:
- Fig. 1: einen Testträger mit einem Probenanalysekanal und einem Mischkanal;
- Fig. 2: eine Detailzeichnung eines Kapillarstops an einer Auslassöffnung des Mischkanals aus Figur 1;
- Fig. 3a,b: eine schematische Prinzipskizze zur Erläuterung der mit der Erfindung erzielten Durchmischung.

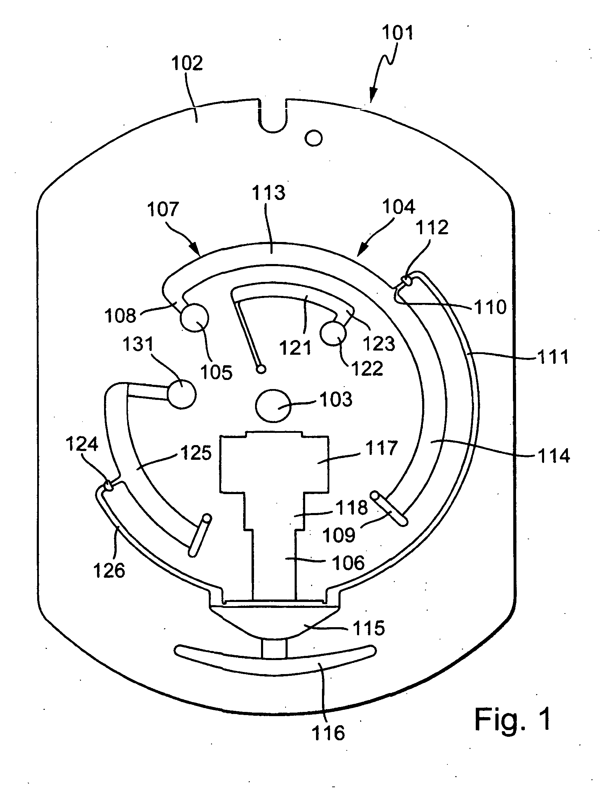

Figur 1 zeigt einen erfindungsgemäßen Testträger 101 mit einem Substrat 102 und einer Bohrung 103 im Zentrum des Testträgers 101, durch die sich eine Rotationsachse erstreckt, um die der scheibenförmige Testträger 101 rotiert.

Ein Probenanalysekanal 104 schließt an seinem Anfang eine Probenaufgabeöffnung 105 ein, durch die eine Flüssigkeitsprobe, bevorzugt beispielsweise Blut, in den Probenanalysekanal 104 eingegeben werden kann. Beispielsweise kann eine Probenflüssigkeit von einem Bediener manuell (mit einer Pipette) in die Probenaufgabeöffnung 105 gegeben werden. Alternativ kann eine Probe von einer Dosierstation eines Analysegerätes durch die Probenaufgabeöffnung 105 in den Probenanalysekanal 104 dosiert werden. An seinem Ende schließt der von dem Substrat 102 umschlossene Probenanalysekanal 104 eine Messzone 106 ein, in der eine für einen Analyten in der Probenflüssigkeit charakteristische Messgröße erfasst, bevorzugt optisch gemessen wird.

Der Probenanalysekanal 104 schließt einen Mischkanal 107 ein, in dem ein Reagenz in getrockneter Form, bevorzugt in lyophilisierter Form enthalten ist. Das getrocknete Reagenz wird von der einströmenden Flüssigkeit im Mischkanal 107 gelöst.

Der Mischkanal 107 weist an seinem einen Ende (Anfang) eine Einlassöffnung 108 auf, die mit der Probenaufgabeöffnung 105 in Fluidverbindung steht. An seinem anderen Ende ist eine Barriere 109 vorgesehen, die als geometrisches Ventil ausgebildet ist, und zum Entlüften des Mischkanals dient.

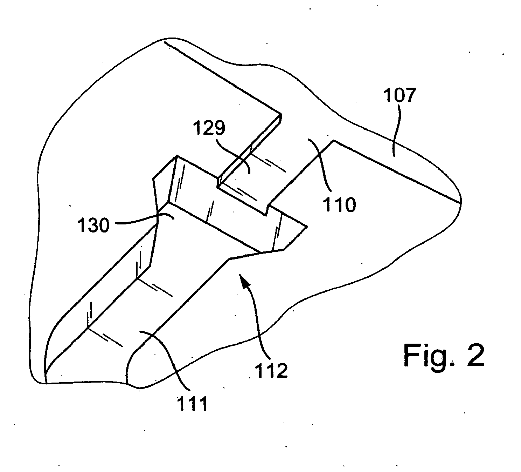

In der Mitte der Länge des Mischkanals 107 ist eine Auslassöffnung 110 angeordnet, über die der Mischkanal 107 mit einem Ableitkanal 111 in Fluidverbindung steht. Zwischen der Auslassöffnung 110 und dem Ableitkanal 111 ist ein Kapillarstop 112 angeordnet, der als geometrisches Ventil ausgebildet ist. Er ist in Figur 2 im Detail dargestellt. Der Kapillarstop 112 verhindert ein selbsttätiges Einströmen einer in dem Mischkanal 107 enthaltenen Flüssigkeit in den Ableitkanal 111. Die auf die Flüssigkeit wirkenden Kapillarkräfte in den Kanälen 107,111 reichen nicht aus, um den Kapillarstop 112 zu überwinden. Dadurch wird gewährleistet, dass der Mischkanal 107 mit einem definierten Probenvolumen gefüllt werden kann. Der Strömungswiderstand des Kapillarstroms 112 wird erst dann überwunden, wenn die Rotationsgeschwindigkeit, mit der der Testträger 101 gedreht wird, eine genügend große Zentrifugalkraft erzeugt, die auf die Flüssigkeit in dem Mischkanal 107 wirkt. Dadurch kann das Einwirken (Einwirkzeit) der Probenflüssigkeit auf das in dem Mischkanal 107 enthaltene Reagenz gesteuert werden.

Vorzugsweise weist der Mischkanal 107 einen rechteckigen Querschnitt auf. Im Falle eines rotierenden Testträgers 101 ist der Mischkanal 107 derart ausgebildet, dass sich die größere Querschnittsdimension zu einer senkrecht zu der Rotationsachse verlaufenden Rotationsebene erstreckt. Bevorzugt sind auch die anderen Kanäle, insbesondere der Ableitkanal 111 rechteckig ausgebildet. Sie haben also einen rechteckigen Querschnitt. Derartige Kanäle oder Kanalstrukturen sind sehr einfach und kostengünstig herzustellen.

Der in diesem Ausführungsbeispiel gezeigte Mischkanal 107 bildet einen Halbkreis, der sich mit einem konstanten Radius um die Rotationsachse (Bohrung 103) des Testträgers 101 erstreckt. Die Einlassöffnung 108 und die Auslassöffnung 110 des Mischkanals 107 sind, wie hier gezeigt, bevorzugt derart angeordnet, dass der Abstand der Auslassöffnung 110 von der Rotationsachse größer ist als der Abstand der Einlassöffnung 108 von der Rotationsachse. Dies hat den Vorteil, dass der Mischkanal 107 vollständig entleert werden kann. Das gesamte in dem Mischkanal 107 einfließende Volumen kann zur Messzone 106 geleitet werden und steht zur Analyse der Probenflüssigkeit zur Verfügung. Selbstverständlich ist auch eine andere Anordnung des Mischkanals 107 möglich. Bei rotierenden Testträgern 101 soll bevorzugt der Abstand der Auslassöffnung von der Rotationsachse stets größer sein als der Abstand der Einlassöffnung, damit durch die bei der Rotation auftretenden Zentrifugalkräfte die Flüssigkeit aus der Auslassöffnung 110 hinausgedrückt wird.

Der Mischkanal 107 schließt einen Zuführabschnitt 113 zwischen der Einlassöffnung 108 und der Auslassöffnung 110 und einen Komplementärabschnitt 114 zwischen der Auslassöffnung 110 und der Barriere 109 am Ende des Mischkanals 107 ein. Bei einem Einströmen einer Probenflüssigkeit durch die Einlassöffnung 108 in dem Mischkanal 107 wird das in dem Mischkanal 107 enthaltene Reagenz gelöst, wobei die gelösten Teile von der Probenflüssigkeit in Strömungsrichtung durch den Mischkanal 107 transportiert werden. Durch den Weitertransport der gelösten Reagenzteile resultiert in dem Mischkanal 107 ein Konzentrationsgradient, wobei in dem Zuführabschnitt 113 eine geringere Konzentration des Reagenz vorliegt als in dem Komplementärabschnitt 114. Die Konzentration im Mischkanal 107 ist im Bereich der Barriere 109 am größten, an der Einlassöffnung 108 am geringsten.

Aufgrund der kapillaren Strömungsverhältnisse findet in dem Mischkanal 107 generell nur eine schlechte Durchmischung statt. Beim Erreichen einer geeigneten Rotationsgeschwindigkeit, bei der der Strömungswiderstand des Kapillarstops 112 von der Probenflüssigkeit überwunden wird, strömen jeweils Teilvolumen aus dem Zuführabschnitt 113 und aus dem Komplementärabschnitt 114 durch die Auslassöffnung 110 in den Ableitkanal 111. Dabei werden die einzelnen Teilvolumen in dem Ableitkanal 111 schnell durchmischt, so dass eine homogene Zusammensetzung entsteht.

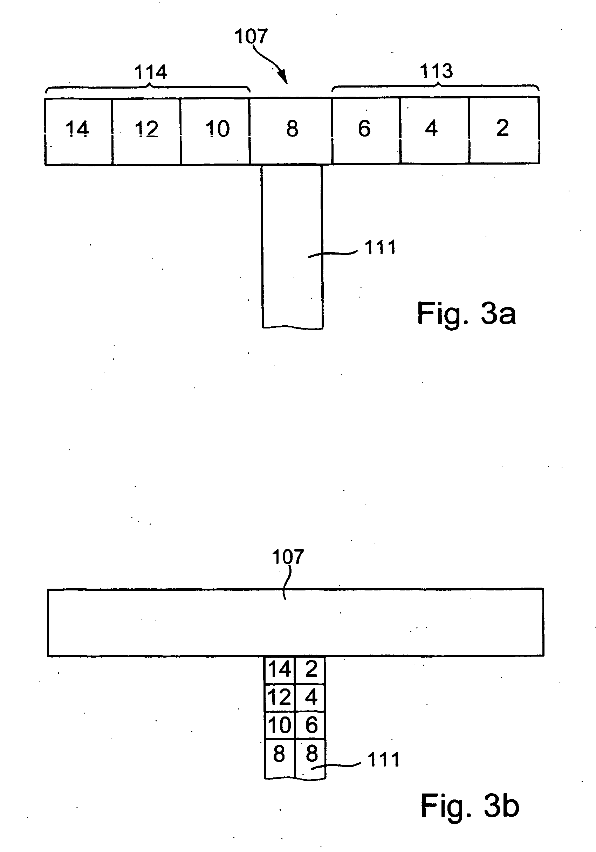

Der Vorgang der Durchmischung ist in den Figuren 3a und 3b anhand einer schematischen Prinzipskizze gezeigt, die den Mischkanal 107 und den Ableitkanal 111 (ohne Kapillarstop 112) darstellt. Die Konzentration des Reagenz in dem Mischkanal 107 ist schematisch anhand von symbolischen Konzentrationswerten 2 bis 14 (in willkürlichen Einheiten) dargestellt. Selbstverständlich ist in der Praxis die Konzentrationsverteilung in dem Mischkanal nicht diskret, wie hier in der Prinzipskizze gezeigt. In der Regel bildet sich eine kontinuierliche, nicht notwendigerweise lineare, Verteilung aus.

Nachdem eine Flüssigkeit in den Mischkanal 107 eingeströmt ist und das Reagenz gelöst ist, stellt sich eine in Figur 3a gezeigte Konzentrationsverteilung ein. Die Konzentration in dem Mischkanal 107 ist in dem Zuführabschnitt 113 geringer als in dem Komplementärabschnitt 114. An dem in Figur 3 rechten Ende ist die Konzentration am geringsten, an dem in Figur 3 linken Ende am größten. Aus dem gefüllten Mischkanal fließen jeweils Teilvolumen aus dem Zuführabschnitt 113 und dem Komplementärabschnitt 114 in den Ableitkanal 111. Die sich in dem Ableitkanal 111 ergebenen Strömungspfade aus dem einzelnen Abschnitten 113,114 ergänzen sich, wie in Figur 3b gezeigt, jeweils derart gegenläufig (idealerweise komplementär) zueinander, dass eine optimierte und sehr gleichmäßige Durchmischung der Probenflüssigkeit mit dem Reagenz stattfindet.

Im Rahmen der Erfindung hat sich gezeigt, dass mit der Anordnung der Einlassöffnung 108 an einem Ende des Mischkanals 107 und der Anordnung der Auslassöffnung 110 in der Mitte des Mischkanals 107 optimale Mischungsergebnisse erzielt werden. Geringe Variationen der optimalen Positionierung der beiden Öffnungen 108,110 führen zu keiner wesentlichen Beeinträchtigung der Mischergebnisse. Es hat sich gezeigt, dass bevorzugt die Auslassöffnung 110 derart anzuordnen ist, dass sie höchstens 20 % der Länge des Mischkanals 107 von der Mitte der Länge des Mischkanals 107 entfernt angeordnet ist. Die Einlassöffnung 108 ist bevorzugt höchstens 20 % der Länge des Mischkanals 107 von dem einen Ende des Mischkanals 107 entfernt. Bei einer Anordnung der Öffnungen 108,110 innerhalb dieser Toleranzbreite werden sehr gute Mischergebnisse erzielt. Bei einer Entfernung aus der optimalen Lage bis zu höchstens 5 % ist der Einfluss auf die Mischergebnisse im Vergleich zu dem optimalen Ergebnis vernachlässigbar.

Bei geeigneten Rotationsgeschwindigkeiten findet in dem Ableitkanal 111 bereits eine Abtrennung roter Blutkörperchen und anderer zellulärer Probenbestandteile statt. Die durchmischte Flüssigkeit, bestehend aus Probenflüssigkeit und darin gelösten Reagenz, wird bei geeigneten Rotationsgeschwindigkeiten in eine Sammelkammer 115 (Plasmasammelkammer) und eine Sammelkammer 116 (Erythrozytensammelkammer) geleitet. Aufgrund der wirkenden Zentrifugalkräfte sammeln sich die roten Blutkörperchen in der Sammelkammer 116, während das Blutplasma im wesentlichen in der Sammelkammer 115 verbleibt.

Bevorzugt ist die Messzone 106 als poröse, saugfähige Matrix ausgebildet. Wird die Rotation des Testträgers angehalten oder verlangsamt, so wird das Reagenzprobengemisch in der Messzone 106 aufgenommen (aufgesaugt). In Strömungsrichtung hinter der Messzone 106 ist eine Abfallkammer 117 angeordnet, in die die Reaktionsteilnehmer, Proben- und/oder Reagenzbestandteile, nach dem Durchströmen der Messzone 106 entsorgt werden.

Der Testträger 101 des gezeigten Ausführungsbeispiels weist weiter eine "Priming"-Struktur 121 auf, die eine Spülflüssigkeitsöffnung 122 und eine Spülflüssigkeitssammelkammer 123 einschließt.

Der Testträger 101 weist einen zweiten Kanal 124 mit einer Aufgabeöffnung 131 auf. Der Kanal 124 entspricht in seiner Struktur im wesentlichen dem Probenanalysekanal 104. Er beschreibt jedoch im Gegensatz zum Probenanalysekanal 104 einen Viertelkreis. Der zweite Kanal 124, der ebenfalls ein Probenanalysekanal sein kann, schließt einen Mischkanal 125, einen Ableitkanal 126 und einen dazwischen angeordneten Kapillarstop 127 ein. Seine Länge beträgt mit ca. 25 bis 30 mm etwa die Hälfte der Länge des Probenanalysekanals 104 (55-65 mm). Die Breite der beiden Kanäle 104,124 beträgt jeweils 3 mm, während die Tiefe (Dimension in Axialrichtung der Rotationsachse) ca. 0,15 mm ist.

Der Kanal 124, der ebenfalls in Fluidverbindung mit der Sammelkammer 115 steht, dient insbesondere zur Aufnahme einer weiteren Flüssigkeit, insbesondere einer Pufferlösung, die für die Analyse, beispielsweise für die bound/free-Trennung, benötigt wird. In dem Mischkanal 125 ist bevorzugt ein Reagenz enthalten, das für die Analyse der in der Messzone analysierten Probenflüssigkeit verwendet wird. Alternativ kann in dem Kanal 124 auch eine weitere (verschiedene) Probe und/oder ein (anderes) Reagenz mit der Probe durchmischt werden. Die durchmischte Flüssigkeit wird dann zur Messzone 106 geleitet.

Figur 2 zeigt den Kapillarstop 112 im Detail. Der Kapillarstop 112 wird von einem geometrischen Ventil 128 gebildet, das einen Primärabschnitt 129 und einen Sekundärabschnitt 130 einschließt, der sich in Strömungsrichtung an dem Primärabschnitt 129 anschließt. Die Querschnittsfläche des sich an die Auslassöffnung 110 anschließenden Primärabschnitt 129 ist kleiner als die Querschnittsfläche des Sekundärabschnitts 130.

Bei einer rechtwinkligen Querschnittsfläche der Kapillarkanäle ist auch der Primärabschnitt 129 des Kapillarstops 112 rechtwinklig; er weist also auch eine rechtwinklige Querschnittsfläche auf, ebenso der Sekundärabschnitt 130. Bevorzugt ist die Querschnittsdimension des Primärabschnitts 129 in Axialrichtung der Rotationsachse kleiner als die entsprechende Querschnittsdimension des Sekundärabschnitts 130. Ebenso ist die Querschnittsdimension des Primärabschnitts 129 in Richtung quer zur Rotationsachse kleiner als die entsprechende Querschnittsdimension des Sekundärabschnitts 130. Durch eine geeignete Wahl der Dimensionen des Primärabschnitts 129 und des Sekundärabschnitts 130 kann der Strömungswiderstand des geometrischen Ventils 128 eingestellt werden.

Damit wird die notwendige Zentrifugalkraft und somit die Rotationsgeschwindigkeit des Testträgers 101 festgelegt, die benötigt wird, damit eine Flüssigkeit durch den Kapillarstop 112 hindurch strömen kann.

## Patentansprüche

1. Mikrofluidisches Element, insbesondere Testträger zur Analyse einer Flüssigkeitsprobe auf einen darin enthaltenen Analyten
mit einem Substrat (102) und einer von dem Substrat (102) und einer Deckschicht umschlossenen Kanalstruktur (104),
wobei
- die Kanalstruktur (104) einen langgestreckten Mischkanal (107) und einen Ableitkanal (111) einschließt,
- der Mischkanal (107) eine Einlassöffnung (108) und eine Auslassöffnung (110) aufweist,
- der Mischkanal (107) zur Mischung eines darin enthaltenen Reagenz mit einer durch die Einlassöffnung (108) in den Mischkanal (107) strömenden Flüssigkeit ausgebildet ist,
- wobei das Reagens in dem Mischkanal (107) in trockener Form enthalten ist,
- die Auslassöffnung (110) des Mischkanals (107) in Fluidverbindung mit dem Ableitkanal (111) steht,
- der Mischkanal (107) einen Zuführabschnitt (113) zwischen der Einlassöffnung (108) und der Auslassöffnung (110) und einen sich an die Auslassöffnung (110) anschließenden, der Einlassöffnung (108) gegenüberliegenden Komplementärabschnitt (114) auf, wobei nach dem Einströmen der Flüssigkeit in den Mischkanal (107) die Konzentration des Reagenz in dem Komplementärabschnitt (114) anders als die Konzentration in dem Zuführabschnitt (113) ist,
**dadurch gekennzeichnet, dass**
- die Auslassöffnung (110) näher bei der Mitte der Länge des Mischkanals (107) angeordnet ist als die Einlassöffnung (108), so dass sich die in dem Ableitkanal (111) ergebenen Strömungspfade aus den einzelnen Abschnitten (113,114) jeweils derart gegenläufig zueinander ergänzen, dass eine optimierte und sehr gleichmäßige Durchmischung der Flüssigkeit mit dem Reagenz erfolgt,
- der Mischkanal (107) eine Länge aufweist, die mindestens zehnmal so groß ist wie die größere Querschnittsdimension seiner Querschnittsfläche.

2. Mikrofluidisches Element nach Anspruch 1, **dadurch gekennzeichnet, dass** die Auslassöffnung (110) von der Mitte der Länge des Mischkanals (107) um höchstens 20 % der Länge des Mischkanals (107) entfernt ist.

3. Mikrofluidisches Element nach Anspruch 1 oder 2, **dadurch gekennzeichnet, dass** das mikrofluidische Element ein Testträger (101) ist und die Kanalstruktur ein Probenanalysekanal (104) ist, der eine Probenaufgabeöffnung (105) und eine Messzone (106) einschließt.

4. Mikrofluidisches Element nach einem der vorhergehenden Ansprüche, **dadurch gekennzeichnet, dass** das mikrofluidische Element um eine Rotationsachse rotierbar ist.

5. Mikrofluidisches Element nach Anspruch 4, **dadurch gekennzeichnet, dass** der Mischkanal (107) derart ausgebildet ist, dass der Abstand der Auslassöffnung (110) von der Rotationsachse größer als der Abstand der Einlassöffnung (108) von der Rotationsachse ist.

6. Mikrofluidisches Element nach einem der vorhergehenden Ansprüche, **gekennzeichnet durch** einen Kapillarstop (112), der einen Strömungswiderstand für von dem Mischkanal (107) in den Ableitkanal (111) strömende Flüssigkeit derartig bildet, dass ein spontanes Entleeren des Mischkanals (107) in den Ableitkanal (111) verhindert wird, bis der Strömungswiderstand **durch** eine externe Kraft überwunden wird.

7. Mikrofluidisches Element nach Anspruch 6, **dadurch gekennzeichnet, dass** die externe Kraft eine durch Rotation des mikrofluidischen Elements erzeugte Zentrifugalkraft und/oder eine Druckkraft ist, die auf die Flüssigkeit in dem Mischkanal (107) wirkt.

8. Mikrofluidisches Element nach Anspruch 6 oder 7, **dadurch gekennzeichnet, dass** der Kapillarstop (112) durch ein geometrisches Ventil (128) gebildet wird, das einen Primärabschnitt (129) und einen sich in Strömungsrichtung anschließenden Sekundärabschnitt (130) einschließt, wobei die Querschnittsfläche des Primärabschnitts (129) kleiner als die Querschnittsfläche des Sekundärabschnitts (130) ist.

9. Mikrofluidisches Element nach Anspruch 6, **dadurch gekennzeichnet, dass** der Kapillarstop (112) einen Kanalabschnitt mit mindestens einer hydrophoben Kanalwand einschließt.

10. Mikrofluidisches Element nach einem der vorhergehenden Ansprüche, **dadurch gekennzeichnet, dass** das Reagenz in dem Mischkanal (107) in lyophilisierter Form enthalten ist.

11. Mikrofluidisches Element nach Anspruch 2, **dadurch gekennzeichnet, dass** die Einlassöffnung (108) von einem der Enden des Mischkanals (107) um höchstens 20 % der Länge des Mischkanals (107) entfernt ist.

12. Mikrofluidisches Element nach einem der vorhergehenden Ansprüche, **dadurch gekennzeichnet, dass** der Mischkanal (107) ein größeres Volumen als der Ableitkanal (111) hat.

13. Mikrofluidisches Element nach einem der vorhergehenden Ansprüche, **dadurch gekennzeichnet, dass** der Mischkanal (107) einen rechteckigen Querschnitt hat.

14. Verfahren zur Bereitstellung einer homogen durchmischten Flüssigkeit mittels eines mikrofluidischen Elements nach Anspruch 1,
wobei
- die Kanalstruktur einen langgestreckten Mischkanal (107) und einen Ableitkanal (111) einschließt,
- der Mischkanal (107) eine Einlassöffnung (108) und eine Auslassöffnung (110) aufweist,
- die Auslassöffnung (110) des Mischkanals (107) in Fluidverbindung mit dem Ableitkanal (111) steht,
**dadurch gekennzeichnet, dass**
- der Mischkanal (107) eine Länge aufweist, die mindestens zehnmal so groß ist wie die größere Querschnittsdimension seiner Querschnittsfläche,
- die Auslassöffnung (110) näher bei der Mitte der Länge des Mischkanals (107) angeordnet ist als die Einlassöffnung (108) und
- der Mischkanal (107) einen Zuführabschnitt (113) zwischen der Einlassöffnung (108) und der Auslassöffnung (110) und einen sich an die Auslassöffnung (110) in Strömungsrichtung anschließenden, der Einlassöffnung (108) gegenüberliegenden Komplementärabschnitt (114) aufweist, und
**gekennzeichnet durch** die folgenden Schritte:
- Einströmenlassen einer Flüssigkeit **durch** die Einlassöffnung (108) in den Mischkanal (107);
- Anlösen eines in dem Mischkanal (107) enthaltenen Reagenz, das in getrockneter Form vorliegt;
- Ausüben einer Kraft auf die Flüssigkeit in dem Mischkanal (107); und
- Einfließenlassen der Flüssigkeit in den Ableitkanal (111) **durch** Auslassöffnung (110) des Mischkanals (107), wobei **durch** Ausüben der Kraft auf die Flüssigkeit Teilvolumen aus dem Zuführabschnitt (113) und dem Komplementärabschnitt (114) des Mischkanals (107) derart durch die Auslassöffnung (110) in den Ableitkanal (111) einströmen, dass die beiden Flüssigkeitstellvolumen beschleunigt vermischt werden und eine optimierte und sehr gleichmäßige Durchmischung der Flüssigkeit und des Reagenz stattfindet.

15. Verfahren nach Anspruch 14, **dadurch gekennzeichnet, dass** die ausgeübte Kraft eine Zentrifugalkraft ist, die durch Rotation des mikrofluidischen Elements erzeugt wird.

16. Verfahren nach Anspruch 14 oder 15, **dadurch gekennzeichnet, dass** das mikrofluidische Element ein Testträger (101) ist und die Kanalstruktur ein Probenanalysekanal (104) ist, der eine Probenaufgabeöffnung (105) und eine Messzone (106) einschließt.

## Claims

1. Microfluidic element, in particular test carrier for analysis of a liquid sample for an analyte contained therein
having a substrate (102) and a channel structure (104), which is enclosed by the substrate (102) and a cover layer,
wherein
- the channel structure (104) comprises an elongate mixing channel (107) and an output channel (111),
- the mixing channel (107) has an inlet opening (108) and an outlet opening (110)
- the mixing channel (107) is adapted for mixing a reagent contained therein with a liquid flowing through the inlet opening (108) into the mixing channel (107),
- wherein the reagent is contained in the mixing channel (107) in dried form,
- the outlet opening (110) of the mixing channel (107) is in fluid communication with the output channel (111),
- the mixing channel (107) has a feed section (113) between the inlet opening (108) and the outlet opening (110) and a complementary section (114), downstream from the outlet opening (110) in the flow direction and opposite to the inlet opening (108), wherein, after the liquid has flowed into the mixing channel (107), the concentration of the reagent in the complementary section (114) is different from the concentration in the feed section (113),
**characterised in that**
- the outlet opening (110) is located closer to the middle of the length of the mixing channel (107) than the Inlet opening (108) so that the flow paths that are caused In the output channel (111) by the different sections (113, 114) supplement one another mutually in such a manner that an optimised and very uniform thorough mixing of the sample liquid with the reagent occurs,
- the length of the mixing channel (107) is at least 10 times as large as the greater cross-sectional dimension of its cross-sectional area.

2. Microfluidic element according to claim 1, **characterised in that** the distance of the outlet opening (110) from the middle of the length of the mixing channel (107) is at most 20% of the length of the mixing channel (107).

3. Microfluidic element according to claim 1 or 2, **characterised in that** the microfluidic element is a test carrier (101) and the channel structure is a sample analysis channel (104), which includes a sample inlet opening (105) and a measuring zone (106).

4. Microfluidic element according to any one of the preceding claims, **characterised in that** the microfluidic element is rotatable about an axis of rotation.

5. Microfluidic element according to claim 4, **characterised in that** the mixing channel (107) is so shaped that the distance of the outlet opening (110) from the axis of rotation is greater than the distance of the inlet opening (108) from the axis of rotation.

6. Microfluidic element according to any one of the preceding claims, **characterised by** a capillary stop (112), which forms a flow resistance for liquid flowing from the mixing channel (107) into the output channel (111) in such a manner that spontaneous emptying of the mixing channel (107) into the output channel (111) is prevented until the flow resistance is overcome by an external force.

7. Microfluidic element according to claim 6, **characterised in that** the external force is a centrifugal force generated by rotation of the microfluidic element and/or a pressure force which acts on the liquid in the mixing channel (107).

8. Microfluidic element according to claim 6 or 7, **characterised in that** the capillary stop (112) is formed by a geometric valve (128), which includes a primary section (129) and a secondary section (130) downstream from the primary section in the flow direction, the cross-sectional area of the primary section (129) being smaller than the cross-sectional area of the secondary section (130).

9. Microfluidic element according to claim 6, **characterised in that** the capillary stop (112) includes a channel section having at least one hydrophobic channel wall.

10. Microfluidic element according to any one of the preceding claims, **characterised in that** the reagent is contained in the mixing channel (107) in lyophilized form.

11. Microfluidic element according to claim 2, **characterised in that** the inlet opening (108) is at most 20% of the length of the mixing channel (107) distant from one end of the mixing channel (107).

12. Microfluidic element according to any one of the preceding claims, **characterised in that** the volume of the mixing channel (107) is larger than the volume of the output channel (111).

13. Microfluidic element according to any one of the preceding claims, **characterised in that** the mixing channel (107) has a rectangular cross-section.

14. Method for providing a homogeneous thoroughly mixed liquid by means of a microfluidic element according to claim 1,
wherein
- the channel structure includes an elongate mixing channel (107) and an output channel (111),
- the mixing channel (107) has an inlet opening (108) and an outlet opening (110),
- the outlet opening (110) of the mixing channel (107) is in fluid communication with the output channel (111),
**characterised in that**
- the length of the mixing channel (107) is at least 10 times as large as the greater cross-sectional dimension of its cross-sectional area,
- the outlet opening (110) is positioned closer to the middle of the length of the mixing channel (107) than the inlet opening (108) and
- the mixing channel (107) has a feed section (113) between the inlet opening (108) and the outlet opening (110) and a complementary section (114), downstream from the outlet opening (110) in the flow direction and opposite to the inlet opening (108), and
**characterised by** the following steps:
- allowing a flow of liquid through the inlet opening (108) into the mixing channel (107);
- dissolving a reagent contained in the mixing channel (107) in dried form;
- exerting a force on the liquid in the mixing channel (107); and
- allowing the liquid to flow into the output channel (111) through the outlet opening (110) of the mixing channel (107), whereby partial volumes flow from the feed section (113) and the complementary section (114) of the mixing channel (107) through the outlet opening (110) into the output channel (111) in such a manner that mixing of the two liquid partial volumes is supported by exertion of the force on the liquid so that an optimised and very uniform thorough mixing of the sample liquid with the reagent occurs.

15. Method according to claim 14, **characterised in that** the exerted force is a centrifugal force which is generated by rotation of the microfluidic element.

16. Method according to claim 14 or 15, **characterised in that** the microfluidic element is a test carrier (101) and the channel structure is a sample analysis channel (104), which comprises a sample Inlet opening (105) and a measuring zone (106).

## Revendications

1. Élément microfluidique, en particulier support de test destiné à l'analyse d'un échantillon liquide pour la détermination d'un analyte contenu dans ledit échantillon,
avec un substrat (102) et une structure de canal (104) entourée par le substrat (102) et une couche de recouvrement,
dans lequel
- la structure de canal (104) inclut un canal de mélange (107) allongée et un canal d'évacuation (111),
- le canal de mélange (107) a une ouverture d'entrée (108) et une ouverture de sortie (110),
- le canal de mélange (107) est conçu pour le mélange d'un réactif contenu dans ledit canal avec un liquide s'écoulant à travers l'ouverture d'entrée (108) dans le canal de mélange (107),
- ledit réactif étant contenu dans le canal de mélange (107) sous une forme sèche,
- l'ouverture de sortie (110) du canal de mélange (107) est en communication fluidique avec le canal d'évacuation (111),
- le canal de mélange (107) a une partie d'alimentation (113) située entre l'ouverture d'entrée (108) et l'ouverture de sortie (110), et une partie complémentaire (114) située à la suite de l'ouverture de sortie (110) à l'opposé de l'ouverture d'entrée (108), sachant qu'après l'entrée du liquide dans le canal de mélange (107), la concentration du réactif dans la partie complémentaire (114) est différente de la concentration dans la partie d'alimentation (113),
**caractérisé en ce que**
- l'ouverture de sortie (110) est plus proche du milieu de la longueur du canal de mélange (107) que l'ouverture d'entrée (108), de telle sorte que les voies d'écoulement des différentes parties (113, 114) dans le canal d'évacuation (111) sont à chaque fois complémentaires l'une de l'autre en sens opposé, permettant ainsi un mélange optimisé et très homogène du liquide avec le réactif,
- le canal de mélange (107) a une longueur au moins de dix fois supérieure à la plus grande dimension de section transversale de sa superficie de section transversale.

2. Élément microfluidique selon la revendication 1, **caractérisé en ce que** l'ouverture de sortie (110) est éloignée du milieu de la longueur du canal de mélange (107) d'au plus 20 % de la longueur du canal de mélange (107).

3. Élément microfluidique selon la revendication 1 ou 2, **caractérisé en ce que** l'élément microfluidique est un support de test (101) et la structure de canal est un canal d'analyse d'échantillon (104) comprenant une ouverture de chargement d'échantillon (105) et une zone de mesure (106).

4. Élément microfluidique selon l'une des revendications précédentes, **caractérisé en ce que** l'élément microfluidique peut tourner autour d'un axe de rotation.

5. Élément microfluidique selon la revendication 4, **caractérisé en ce que** le canal de mélange (107) est réalisé de telle façon que la distance séparant l'ouverture de sortie (110) de l'axe de rotation est supérieure à la distance séparant l'ouverture d'entrée (108) de l'axe de rotation.

6. Élément microfluidique selon l'une des revendications précédentes, **caractérisé par** un arrêt capillaire (112) formant une résistance à l'écoulement pour le liquide s'écoulant du canal de mélange (107) dans le canal d'évacuation (111), de façon à empêcher un vidage spontané du canal de mélange (107) dans le canal d'évacuation (111) jusqu'à ce que la résistance à l'écoulement soit neutralisée par une force externe.

7. Élément microfluidique selon la revendication 6, **caractérisé en ce que** la force externe est une force centrifuge générée par une rotation de l'élément microfluidique et/ou une force de pression agissant sur le liquide dans le canal de mélange (107).

8. Élément microfluidique selon la revendication 6 ou 7, **caractérisé en ce que** l'arrêt capillaire (112) est formé par une valve géométrique (128) comprenant une partie primaire (129) suivie dans le sens d'écoulement d'une partie secondaire (130), la superficie de section transversale de la partie primaire (129) étant inférieure à la superficie de section transversale de la partie secondaire (130).

9. Élément microfluidique selon la revendication 6, **caractérisé en ce que** l'arrêt capillaire (112) inclut une partie de canal ayant au moins une paroi de canal hydrophobe.

10. Élément microfluidique selon l'une des revendications précédentes, **caractérisé en ce que** le réactif est contenu dans le canal de mélange (107) sous une forme lyophilisée.

11. Élément microfluidique selon la revendication 2, **caractérisé en ce que** l'ouverture d'entrée (108) est éloignée de l'une des extrémités du canal de mélange (107) d'au plus 20 % de la longueur du canal de mélange (107).

12. Élément microfluidique selon l'une des revendications précédentes, **caractérisé en ce que** le canal de mélange (107) a un plus grand volume que le canal d'évacuation (111).

13. Élément microfluidique selon l'une des revendications précédentes, **caractérisé en ce que** le canal de mélange (107) a une section transversale rectangulaire.

14. Procédé destiné à fournir un liquide mélangé homogène au moyen d'un élément microfluidique selon la revendication 1,
dans lequel
- la structure de canal inclut un canal de mélange (107) allongée et un canal d'évacuation (111),
- le canal de mélange (107) a une ouverture d'entrée (108) et une ouverture de sortie (110),
- l'ouverture de sortie (110) du canal de mélange (107) est en communication fluidique avec le canal d'évacuation (111),
**caractérisé en ce que**
- le canal de mélange (107) a une longueur au moins de dix fois supérieure à la plus grande dimension de section transversale de sa superficie de section transversale,
- l'ouverture de sortie (110) est plus proche du milieu de la longueur du canal de mélange (107) que l'ouverture d'entrée (108) et
- le canal de mélange (107) a une partie d'alimentation (113) située entre l'ouverture d'entrée (108) et l'ouverture de sortie (110), et une partie complémentaire (114) située dans le sens d'écoulement à la suite de l'ouverture de sortie (110) à l'opposé de l'ouverture d'entrée (108), et
**caractérisé par** les étapes suivantes :
- introduire un liquide à travers l'ouverture d'entrée (108) dans le canal de mélange (107) ;
- dissoudre un réactif contenu dans le canal de mélange (107), lequel réactif se présente sous une forme séchée :
- exercer une force sur le liquide dans le canal de mélange (107) ; et
- faire couler le liquide dans le canal d'évacuation (111) à travers l'ouverture de sortie (110) du canal de mélange (107), sachant que par la force exercée sur le liquide, des volumes partiels de la partie d'alimentation (113) et de la partie complémentaire (114) du canal de mélange (107) entrent à travers l'ouverture de sortie (110) dans le canal d'évacuation (111), de telle sorte que les deux volumes partiels de liquide sont mélangés de manière accélérée et qu'un mélange optimisé et très homogène du liquide et du réactif a lieu.

15. Procédé selon la revendication 14, **caractérisé en ce que** la force exercée est une force centrifuge générée par la rotation de l'élément microfluidique.

16. Procédé selon la revendication 14 ou 15, **caractérisé en ce que** l'élément microfluidique est un support de test (101) et la structure de canal est un canal d'analyse d'échantillon (104) comprenant une ouverture de chargement d'échantillon (105) et une zone de mesure (106).
